# EUROPÄISCHE PATENTSCHRIFT

(11) **EP 3 480 039 B1**
(45) Veröffentlichungstag und Bekanntmachung des Hinweises auf die Patenterteilung: **29.04.2020**
(21) Anmeldenummer: 18199974.9
(22) Anmeldetag: 11.10.2018
(51) Int. Cl.: B60H 1/00

(54) **GEHÄUSE FÜR EINE HEIZ- UND/ODER KLIMATISIERUNGSVORRICHTUNG SOWIE EINE SOLCHE VORRICHTUNG FÜR FAHRZEUGE**
HOUSING FOR A HEATING AND/OR AIR CONDITIONING DEVICE AND SUCH A DEVICE FOR VEHICLES
LOGEMENT POUR UN DISPOSITIF DE CHAUFFAGE ET / OU DE CLIMATISATION AINSI QU'UN TEL DISPOSITIF POUR VÉHICULES

(30) Priorität: 06.11.2017 DE 202017106683 U
(43) Veröffentlichungstag der Anmeldung: 08.05.2019
(73) Patentinhaber: Konvekta Aktiengesellschaft, 34613 Schwalmstadt-Ziegenhain (DE)
(72) Erfinder: Battenberg, Andreas, 34637 Schrecksbach (DE); Lossek, Benjamin, 34613 Schwalmstadt (DE); Völker, Denis, 34628 Willingshausen (DE); Vonholdt, Lothar, 34621 Frielendorf (DE)
(74) Vertreter: Lindinger, Bernhard

(56) Entgegenhaltungen:
- WO-A1-2018/207759
- DE-B3-102004 051 874
- DE-U1-202017 106 683
- JP-A- 2002 059 734

## Beschreibung

Die Erfindung betrifft ein Gehäuse für eine Heiz- und/oder Klimatisierungsvorrichtung für Fahrzeuge gemäß dem Oberbegriff des Anspruchs 1, also dass das Gehäuse Aufnahmeraum für wenigstens einen Verdampfer und/oder Heiz-Wärmetauscher aufweist, derart ausgeformt, dass je nach Art der Heiz- und/oder Klimatisierungsvorrichtung zumindest ein Verdampfer und/oder Heiz-Wärmetauscher aufnehmbar ist/sind. Ferner betrifft die Erfindung eine Heiz- und/oder Klimatisierungsvorrichtung mit einem derartigen Gehäuse sowie ein Fahrzeug mit einer solchen Heiz- und/oder Klimatisierungsvorrichtung und ein Verfahren zum Zusammensetzen einer derartigen Heiz- und/oder Klimatisierungsvorrichtung. Insbesondere für Nutzlandkraftfahrzeuge, wie beispielsweise landwirtschaftliche Kabinenfahrzeuge, werden derartige Heiz- und/oder Klimatisierungsvorrichtung verwendet.

In oder an einem solchen Gehäuse ist in den meisten Fällen für die Luftzufuhr der zu behandelnden Luft wenigsten eine Luftfördereinrichtung wie beispielsweise ein Radialgebläse vorhanden. Die zu behandelnde Luft strömt bei Betrieb der Heiz- und/oder Klimatisierungsvorrichtung durch zumindest einen Verdampfer und/oder Heiz-Wärmetauscher, sofern in das Gehäuse eingebaut, und wird dort für ein Heizen und/oder Klimatisieren üblicherweise zumindest eines Bereichs des Fahrzeuginnenraums behandelt. Durch wenigstens eine Luftdurchlassöffnung im Gehäuse kann die behandelte Luft weiter zum zu heizenden und/oder klimatisierenden Bereich strömen. Ein Verdampfer ist normalerweise in einen Kältemittelkreislauf mit zumindest Verdichter, Kondensator oder Gaskühler und Expansionsorgan integriert. Insofern benötigt er wenigstens einen Anschluss mit Kältemittelleitung an den Kältemittelkreislauf. Oft sind nicht sämtliche Komponenten des Kältemittelkreislaufs in dem den Verdampfer aufnehmenden Gehäuse enthalten, sodass der wenigstens eine Anschluss mit Kältemittelleitung zu den nicht im Gehäuse befindlichen Komponenten des Kältemittelkreislaufs durch das Gehäuse geführt werden muss. Ähnlich verhält es sich mit einem Heiz-Wärmetauscher. Auch bei ihm, sofern im Gehäuse eingebaut, ist der wenigstens eine Anschluss zu den übrigen nicht im Gehäuse vorgesehenen Komponenten des Heizkreislaufs und/oder zur Energiequelle des Heiz-Wärmetauschers durch das Gehäuse zu führen.

Bekannt ist eine derartige Heiz- und/oder Klimatisierungsvorrichtung für Fahrzeuge mit einem Gehäuse aus DE 10 2013 221 148 A1. Dort kann in einen Aufnahmeraum des Gehäuses ein Verdampfer oder ein Heiz-Wärmetauscher aufgenommen werden. Ferner ist in DE 10 2013 221 148 A1 eine Ausgestaltung offenbart, mit der beide Funktionen also Heizen und Klimatisieren der zu behandelnden Luft möglich sind. Außerdem zeigt dort eine Ausgestaltung die Änderbarkeit des Luftauslasses mit Vorstanzungen dafür an der Deckwand und Rückwand, sodass wählbar der Luftauslass an verschieden Stellen mit dem gleichen Gehäuse möglich ist, wobei der nicht gewählte zum Öffnen vorgestanzte Bereich verschlossen bleibt. Außerdem offenbart DE 10 2013 221 148 A1 ein Gehäuse mit vorab eingearbeiteten Kondenswasserwannen für stehende, liegende oder hängende Position der Heiz- und/oder Klimatisierungsvorrichtung, was eine Flexibilität hinsichtlich der Lage der im Fahrzeug eingebauten Vorrichtung ermöglicht, wobei zum Öffnen vorgestanzte Bereiche im Gehäuse für den jeweiligen dementsprechend wählbaren Kondenswasserablauf bestehen. Jedoch ist in DE 10 2013 221 148 A1 dennoch die Flexibilität, die vor allem das Gehäuse bietet, unzureichend. Zum Beispiel offenbart DE 10 2013 221 148 A1 keine ausreichend flexible Lösung für die jeweilige Wahl beziehungsweise Anforderung für den Einbau der Heiz- und/oder Klimatisierungsvorrichtung hinsichtlich der Position der durch das Gehäuse zu führenden Anschlüsse des Verdampfers und/oder Heiz-Wärmetauschers. Ferner ist auch nicht in DE 10 2005 005 880 A1 ein diesbezüglich ausreichend flexibles Ausführungsbeispiel offenbart. Dort ist eine Lüftungs-, Heiz- und/oder Klimatisierungseinrichtung für den Fahrgastraum eines Fahrzeugs offenbart, bei der ein elektrischer Zusatzheizkörper von einer Seite in das Innere des Gehäuses schubladenartig eingeführt ist. Außerdem wird in DE 10 2005 005 880 A1 ein Verfahren zum Einsetzen des Zusatzheizkörpers in das Innere des Gehäuses offenbart. In DE 10 2010 062 326 A1 ist eine Kraftfahrzeugklimaanlage mit Gehäuse, das ein Einschubraum mit mindestens einer Einschuböffnung für zumindest eine Heizeinrichtung aufweist, offenbart. Die mindestens eine Einschuböffnung ist dabei von jeweils einem Adapterdeckel verschließbar, an den eine Heizeinrichtung befestigt ist, wobei die Art und Ausformung des Adapterdeckels angepasst an den jeweils gewählte Heizeinrichtung auswählbar ist. Damit wird zwar für ein identisches Gehäuse eine gewisse Flexibilität erreicht, doch dafür sind verschiedene Varianten von Adapterdeckeln notwendig. Außerdem wird in DE 10 2010 062 326 A1 ein entsprechendes Verfahren zur Herstellung von Kraftfahrzeugklimaanlagen mit unterschiedlichen Heizeinrichtungen offenbart. In DE 10 2004 051874 B3 ist ein Modulsystem zum Aufbau eines Luftbehandlungsgerätes für Fahrzeuge offenbart, das einen aus mehreren Gehäusemodulen bestehenden Gehäuseverbund, der zumindest ein Basismodul und ein insbesondere zur Um- beziehungsweise Aufrüstung des Luftbehandlungsgeräts mit zusätzlichen Funktionselementen bestückbares Erweiterungsmodul aufweist.

Der Erfindung liegt daher die erste Aufgabe zugrunde, ein verbessertes Gehäuse für eine Heiz- und/oder Klimatisierungsvorrichtung für Fahrzeuge, wobei das Gehäuse Aufnahmeraum für wenigstens einen Verdampfer und/oder Heiz-Wärmetauscher aufweist, bereitzustellen.
Ferner liegen der Erfindung entsprechend die weiteren Aufgaben, eine Heiz- und/oder Klimatisierungsvorrichtung für Fahrzeuge mit einem derartigen verbesserten Gehäuse sowie ein Fahrzeug mit einer derartigen Heiz- und/oder Klimatisierungsvorrichtung bereitzustellen, zugrunde. Außerdem liegt der Erfindung entsprechend die weitere Aufgabe, ein verbessertes Verfahren zum Zusammensetzen einer Heiz- und/oder Klimatisierungsvorrichtung bereitzustellen, zugrunde.

### Zusammenfassung der Erfindung:

Die erste Aufgabe wird durch ein Gehäuse gemäß den Merkmalen des Anspruchs 1 gelöst. Dadurch, dass das Gehäuse für eine Heiz- und/oder Klimatisierungsvorrichtung für Fahrzeuge, das Aufnahmeraum für wenigstens einen Verdampfer und/oder Heiz-Wärmetauscher aufweist, derart ausgeformt ist, dass je nach Art der Heiz- und/oder Klimatisierungsvorrichtung zumindest ein Verdampfer und/oder Heiz-Wärmetauscher aufnehmbar ist/sind, wobei zwei gegenüberliegende Gehäuseseitendeckel des Gehäuses jeweils zumindest einen für das Öffnen durch Vorstanzung(en) oder Sollbruchstelle(n) vorbereiteten Bereich aufweisen, der/die dafür vorgesehen ist/sind, dass bei einem in das Gehäuse aufnehmbaren Verdampfer und/oder Heiz-Wärmetauscher wahlweise mindestens ein Anschluss durch den einen oder den anderen der beiden sich gegenüberliegenden Gehäuseseitendeckel durch den jeweiligen wenigstens einen dafür für das Öffnen vorbereiteten Bereich durchführbar ist/sind, wird die erste Aufgabe gelöst. Die für das Öffnen vorbereiteten Bereiche der zwei sich gegenüberliegenden Gehäuseseitendeckel sind somit derart angeordnet, dass bei einem in das Gehäuse aufnehmbaren Verdampfer und/oder Heiz-Wärmetauscher wahlweise mindestens ein Anschluss durch den einen oder den anderen der beiden sich gegenüberliegenden Gehäuseseitendeckel durch den jeweiligen wenigstens einen dafür für das Öffnen vorbereiteten Bereich durchführbar ist/sind. Für das Durchführen des jeweiligen Anschlusses ist der für das Öffnen vorbereitete Bereich geöffnet, also der dann die Öffnung bildende Bereich, die durch das Herausnehmen, Herausbrechen oder Wegklappen des Teils des Gehäuseseitendeckels entsprechend der Vorbereitung Vorstanzung(en) oder Sollbruchstelle(n) vorhanden ist. Somit wird auf einfache Weise für die jeweilige Wahl beziehungsweise Anforderung für den Einbau einer Heiz- und/oder Klimatisierungsvorrichtung mit dem erfindungsgemäßen Gehäuse hinsichtlich der Position der durch das Gehäuse zu führenden Anschlüsse des Verdampfers und/oder Heiz-Wärmetauschers eine flexible nämlich zwischen zwei gegenüberliegenden Gehäuseseitendeckeln wählbare Anschlussmöglichkeit geboten. In den zum Öffnen durch Vorstanzung(en) oder Sollbruchstelle(n) vorbereiteten Bereichen lassen sich die bereits hergestellten Gehäuseseitendeckel nach Wahl einfach und ohne besonderen Aufwand öffnen. Andererseits ist ein solcher ungeöffneter Bereich geschlossen und bildet keine undichte Stelle. Ein extra Verschluss ist dabei entbehrlich. Der jeweilig in das Gehäuse aufnehmbare Verdampfer und/oder Heiz-Wärmetauscher lässt sich sowohl in der einen Position als auch um 180 Grad gedreht mit seinem mindestens einen Anschluss auf der dann anderen Seite in das Gehäuse aufnehmen. Dieses spart unter anderem Aufwand und Herstellungskosten.
Ein Heiz-Wärmetauscher ist beispielsweise ein in einen Heizkreislauf mit Wärmemittel wie zum Beispiel Wasser angeschlossener Wärmetauscher zum Heizen von Luft. Beispielsweise kommt für ein Ausführungsbeispiels nach Anspruch 1 auch ein elektrisch betreibbarer, an eine Fahrzeugbatterie als Energiequelle anschließbarer Heiz-Wärmetauscher in Frage.

In den Unteransprüchen sind vorteilhafte Ausgestaltungen, Weiterbildungen und Verbesserungen des jeweiligen Gegenstandes der Erfindung angegeben.

Vorzugsweise sind die beiden sich gegenüberliegenden Gehäuseseitendeckel des erfindungsgemäßen Gehäuses, zumindest soweit die für das Öffnen vorbereiteten Bereiche nicht geöffnet sind, spiegelsymmetrisch zueinander ausgeformt. Dadurch lassen sich in das Gehäuse aufzunehmende Komponenten, wie Verdampfer und/oder Heiz-Wärmetauscher besonders gut mit Ihren jeweiligem mindestens einem Anschluss sowohl in der einen Position als auch um 180 Grad gedreht mit seinem mindestens einen Anschluss auf der dann anderen Seite in das Gehäuse aufnehmen.

Gemäß einer vorteilhaften Ausgestaltung sind die in den beiden sich gegenüberliegenden Gehäuseseitendeckeln befindlichen für das Öffnen vorbereiteten Bereiche, die für den Anschluss eines Heiz-Wärmetauscher vorgesehen sind, geöffnet zum Durchführen von mindestens einer Leitungen für Wärmemittel, wie insbesondere Wasser, ausgeformt. Diese Ausgestaltung ist für einen Heiz-Wärmetauscher, der in einen Heizkreislauf mit zirkulierendem Wärmemittel angeschlossen wird, besonders gut passend.

Von Vorzug sind die in den beiden sich gegenüberliegenden Gehäuseseitendeckeln befindlichen für das Öffnen vorbereiteten Bereiche, die für den Anschluss eines Verdampfers vorgesehen sind, geöffnet zum Durchführen von zumindest einer Leitungen für Kältemittel ausgeformt. Diese Ausgestaltung ist für einen in einem Kältemittelkreislauf eingebundenen Verdampfer besonders gut passend.

Gemäß einer vorteilhaften Weiterbildung des erfindungsgemäßen Gehäuses weisen die gegenüberliegenden Gehäuseseitendeckel jeweils zumindest einen weiteren für das Öffnen, insbesondere durch Vorstanzung(en) oder Sollbruchstelle(n), vorbereiteten Bereich auf, der/die dafür vorgesehen ist/sind, dass ein Temperaturfühler wahlweise durch den einen oder den anderen der beiden sich gegenüberliegenden Gehäuseseitendeckel durch den jeweiligen wenigstens einen dafür für das Öffnen vorbereiteten Bereich durchführbar ist/sind. Der jeweils zumindest eine weitere für das Öffnen vorbereiteten Bereich ist somit derart angeordnet, dass ein Temperaturfühler wahlweise durch den einen oder den anderen der beiden sich gegenüberliegenden Gehäuseseitendeckel durch den jeweiligen wenigstens einen dafür für das Öffnen vorbereiteten Bereich durchführbar ist/sind. Somit bestehen mindestens zwei einfach zu öffnende Bereiche für die wahlweise Position der Durchführung eines Temperaturfühlers durch das Gehäuse. Dieses erhöht die Flexibilität für eine Heiz- und/oder Klimatisierungsvorrichtung mit dem erfindungsgemäßen Gehäuse.

Vorzugsweise ist das erfindungsgemäße Gehäuse derart ausgestaltet, dass der Abstand zwischen den beiden gegenüberliegenden Gehäuseseitendeckeln mit in der Länge passenden weiteren Gehäuseseiten an die jeweilige Längsausdehnung des jeweiligen vorgesehenen Verdampfers und/oder Heiz-Wärmetauschers angepasst ist.
Dadurch sind verschiedene Längen von Verdampfer und/oder Heiz-Wärmetauscher, also verschiedene Leistungsgrößen dieser, in das Gehäuse mit den beiden sich gegenüberliegenden und dafür unveränderten Gehäuseseitendeckeln einbaubar. Dieses spart Aufwand und Herstellungskosten, denn zwei gegenüberliegende Gehäuseseitendeckel mit den Anschlussmöglichkeiten bleiben für verschiedene Leistungsklassen der Heiz- und/oder Klimatisierungsvorrichtung gleich.

Gemäß einer vorteilhaften Weiterbildung des erfindungsgemäßen Gehäuses weist eine erste der weiteren Gehäuseseiten zum außen an der Gehäuseseite Anschließen von zumindest einer Luftfördereinrichtung oder von zumindest einem Luftleitkanal zu mindestens einer Luftfördereinrichtung wenigstens eine Befestigungseinrichtung sowie wenigstens eine erste Luftdurchlassöffnung auf. Dadurch lässt sich ein oder mehrere Luftfördereinrichtungen, wie beispielsweise ein oder mehrere Radialgebläse, an dem Gehäuse für das Durchströmen von zu behandelnder Luft durch den Aufnahmeraum des Gehäuses befestigen oder entsprechend ein oder mehrere Luftleitkanäle zur Luftfördereinrichtung befestigen. Zusätzlich weist bei einer derartigen Weiterbildung eine zweite der weiteren Gehäuseseiten zumindest eine zweite Luftdurchlassöffnung vorgesehen für in den Aufnahmeraum des Gehäuses zu zumindest einer Luftfördereinrichtung oder aus dem Aufnahmeraum des Gehäuses von zumindest einer Luftfördereinrichtung strömende Luft auf. Dadurch kann bei Betrieb einer Heiz- und/oder Klimatisierungsvorrichtung mit dem Gehäuse die von der mindestens einen Luftfördereinrichtung beförderte zu behandelnde Luft gut durch den Aufnahmeraum mit dem dann darin befindlichen wenigstens einen Verdampfer und/oder Heiz-Wärmetauscher hindurchströmen.

Gemäß einer vorteilhaften Ausgestaltung des erfindungsgemäßen Gehäuses bestehen zumindest die beiden sich gegenüberliegenden Gehäuseseitendeckel aus gespritztem Kunststoff. Damit lassen sich zumindest die Gehäuseseitendeckel einfach, kostengünstig und mit geringer Masse beziehungsweise geringem Gewicht herstellen.

Schließlich können die Merkmale der Unteransprüche im Wesentlichen frei miteinander und nicht durch die in den Ansprüchen vorliegende Reihenfolge festgelegt kombiniert werden, sofern sie unabhängig voneinander sind.

Die entsprechenden weiteren Aufgaben werden durch eine Heiz- und/oder Klimatisierungsvorrichtung für Fahrzeuge mit den Merkmalen des Anspruchs 9, also dass sie zumindest einen Verdampfer und/oder einen Heiz-Wärmetauscher sowie wenigstens eine Luftfördereinrichtung umfasst und ein erfindungsgemäßes Gehäuse aufweist, und durch ein Fahrzeug mit den Merkmalen des Anspruchs 10, also mit einer derartigen erfindungsgemäßen Heiz- und/oder Klimatisierungsvorrichtung, sowie die entsprechende weitere Aufgabe bezüglich eines Verfahrens durch ein Verfahren zur Zusammensetzung der erfindungsgemäßen Heiz- und/oder Klimatisierungsvorrichtung mit den Verfahrensschritten des Anspruchs 12 gelöst.
Besonders vorteilhaft ist ein Landkraftfahrzeug, wie insbesondere ein Nutzlandkraftfahrzeug, mit einer Heiz- und/oder Klimatisierungsvorrichtung, die ein erfindungsgemäßes Gehäuse aufweist.

### Kurze Beschreibung der Zeichnungen:

Anhand der Zeichnungen werden Ausführungsbeispiele der Erfindung erläutert.

Es zeigen
Figur 1 in Explosionsdarstellung ein Ausführungsbeispiel einer für ein Fahrzeug vorgesehenen Heiz- und/oder Klimatisierungsvorrichtung mit einem erfindungsgemäßen Gehäuse,
Figur 2 ein Ausführungsbeispiel für ein erfindungsgemäßes Gehäuse einer Heiz- und/oder Klimatisierungsvorrichtung für ein Fahrzeug,
Figur 3 in isometrischer Darstellung ein weiteres Ausführungsbeispiel einer für ein Fahrzeug vorgesehenen Heiz- und/oder Klimatisierungsvorrichtung mit einem erfindungsgemäßen Gehäuse, und
Figur 4 in isometrischer Darstellung ein weiteres Ausführungsbeispiel einer für ein Fahrzeug vorgesehenen Heiz- und/oder Klimatisierungsvorrichtung mit einem erfindungsgemäßen Gehäuse.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

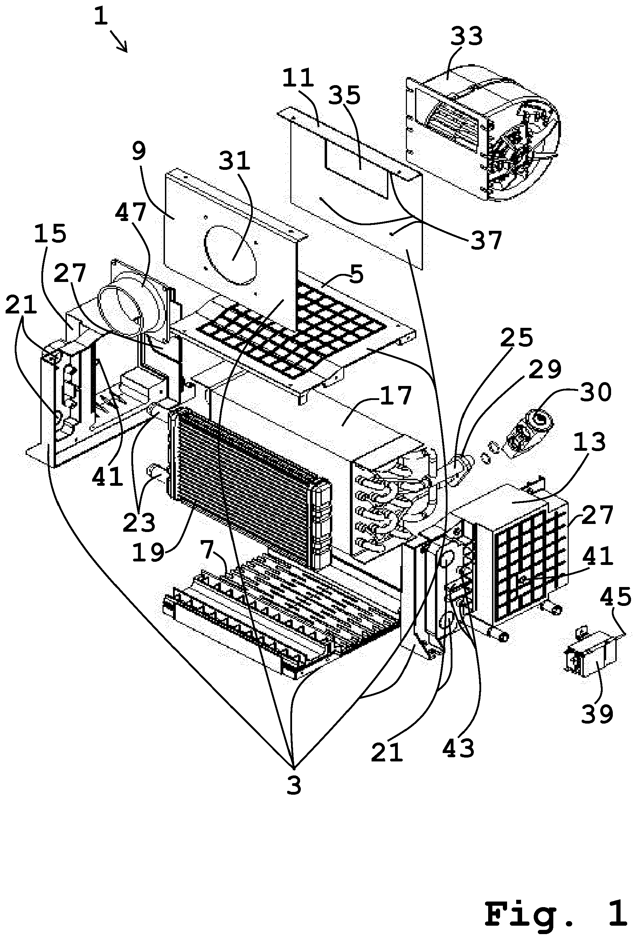

In Figur 1 ist in Explosionsdarstellung ein Ausführungsbeispiel einer für ein Fahrzeug vorgesehenen Heiz- und/oder Klimatisierungsvorrichtung 1 mit einem erfindungsgemäßen Gehäuse 3 gezeigt. Das Gehäuse 3 besteht aus einer oberen und unteren Gehäuseseite 5, 7 sowie einer vorderen und hinteren Gehäuseseite 9, 11 und zwei sich gegenüberliegenden Gehäuseseitendeckeln 13, 15. Zusammengesetz umhausen die Gehäuseseiten 5, 7, 9, 11 und die beiden Gehäuseseitendeckel 13, 15 einen Aufnahmeraum für einen Verdampfer 17 und einen Heiz-Wärmetauscher 19. Die beiden sich gegenüberliegenden Gehäuseseitendeckel 13, 15 sind aus gespritztem Kunststoff gefertigt. Denkbar sind auch andere Materialien, wie geschäumter beziehungsweise expandierter Kunststoff oder ein Metall wie zum Beispiel Aluminium. In den beiden sich gegenüberliegenden Gehäuseseitendeckeln 13, 15 sind im vorderen Teil jeweils zwei für das Öffnen vorbereitete Bereich 21 zum Durchführen der Anschlüsse 23 des Heiz-Wärmetauschers 19 an den Heizkreislauf vorhanden. Diese Bereiche 21 sind für das Öffnen mit Vorstanzungen oder Sollbruchstellen durch entsprechende Verjüngung der Gehäuseseitendeckelwand vorbereitet. Dadurch können diese Bereiche 21 in den Gehäuseseitendeckeln 13, 15 je nach Wahl einfach und ohne viel Aufwand geöffnet werden oder geschlossen bleiben. Beim Öffnen wird der Bereich 21 aus dem jeweiligen Gehäuseseitendeckel 13, 15 gemäß der Vorstanzung oder Sollbruchstelle herausgenommen. Der Heiz-Wärmetauscher 19 ist dadurch derart in das Gehäuse 3 aufnehmbar, dass dessen Anschlüsse 23 wählbar durch die eine oder die andere der beiden sich gegenüberliegenden Gehäuseseitendeckel 13, 15 durch den jeweiligen dafür zu öffnenden Bereich 21 durchführbar sind. Der Heiz-Wärmetauscher 19 kann also wahlweise mit seinen Anschlüssen 23 zur einen oder zur dazu gegenüberliegenden Seite um 180 Grad gedreht in den Aufnahmeraum des Gehäuses 3 aufgenommen werden. Die zum Öffnen vorbereiteten Bereiche 21 sind in diesem Fall bei Öffnung zum Durchführen von jeweils einer Leitung für Wärmemittel, wie beispielsweise Wasser oder mit Ethylenglykol gemischtes Wasser, ausgeformt. Für die Anschlüsse 25 des Verdampfers 17 an den Kältemittelkreislauf sind an der hinteren Seite des jeweiligen Gehäuseseitendeckels 13, 15 auch entsprechende für das Öffnen durch Vorstanzungen oder Sollbruchstellen vorbereitete Bereiche 27 vorhanden. Beim Öffnen wird der jeweilige Bereich 27 einfach aus dem jeweiligen Gehäuseseitendeckel 13, 15 gemäß der Vorstanzung oder Sollbruchstelle herausgenommen. Dadurch können diese für das Öffnen vorbereiteten Bereiche 27 in den Gehäuseseitendeckeln 13, 15 je nach Wahl einfach und ohne viel Aufwand geöffnet werden oder geschlossen bleiben. Der Verdampfer 17 ist dadurch derart in das Gehäuse 3 aufnehmbar, dass dessen Anschlüsse 25 wahlweise durch die eine oder die andere der beiden sich gegenüberliegenden Gehäuseseitendeckel 13, 15 durch den jeweiligen dafür geöffneten Bereich 27 durchführbar sind. Der Verdampfer 17 kann also wahlweise mit seinen Anschlüssen 25 auf der einen oder gedreht mit seinen Anschlüssen 25 auf der anderen Seite in den Aufnahmeraum des Gehäuses 3 aufgenommen werden. Die für das Öffnen vorbereiteten Bereiche 27 sind in diesem Fall bei Öffnung zum Durchführen von jeweils einer Leitung für Kältemittel ausgeformt. Als Kältemittel sind übliche bekannte wie zum Beispiel Kohlendioxid denkbar. Außerhalb des Gehäuses 3 ist an die Anschlüsse 25 des Verdampfers 17 zum Kältemittelkreislauf eine Halteplatte 29 für weitere Anschlüsse zu Komponenten des Kältemittelkreislaufs wie beispielsweise ein als Expansionsventil ausgebildetes Expansionsorgan 30 anbringbar. Ein Kältemittelkreislauf verfügt mit Kältemittelleitungen verbunden wenigstens über einen Verdichter, einen Kondensator oder Gaskühler, ein Expansionsorgan 30 und einen Verdampfer 17. Das Leistungsvermögen des Verdampfers 17 beträgt in diesem Ausführungsbeispiel vier Kilowatt. Die beiden sich gegenüberliegenden Gehäuseseitendeckel 13, 15 sind in diesem Ausführungsbeispiel, zumindest soweit die für das Öffnen vorbereiteten Bereiche 21, 27 nicht geöffnet sind, spiegelsymmetrisch zueinander ausgeformt. Sowohl die untere Gehäuseseite 7 als auch die obere Gehäuseseite 5 weisen innen Ausformungen zum Halten eines aufzunehmenden Verdampfers 17 und Heiz-Wärmetauschers 19 auf. Je nach gewählter Art des Heiz- und/oder Klimatisierungsvorrichtung 1 ist in den Aufnahmeraum des Gehäuses 3 nur ein Heiz-Wärmetauscher 19 oder nur ein Verdampfer 17 oder bei einer Kombinationsausführung sowohl ein Heiz-Wärmetauscher 19 als auch ein Verdampfer 17 aufgenommen. Die obere Gehäuseseite 5 und untere Gehäuseseite 7 sind aus gespritztem Kunststoffe gefertigt. Auch andere Materialien wie geschäumter beziehungsweise expandierter Kunststoff oder Metall, wie beispielsweise Aluminium, sind denkbar. Die vordere Gehäuseseite 9 weist ohne darauf beschränkt zu sein in diesem Fall eine Luftdurchlassöffnung 31 auf. Je nach Blas- und Saugrichtung der von der als Radialgebläse ausgebildeten Luftfördereinrichtung 33 strömt bei Betrieb zu behandelnde Luft durch die Luftdurchlassöffnung 31 aus dem Aufnahmeraum des Gehäuses 3 heraus oder hinein. Beide Varianten der Luftfördereinrichtung 33 sind denkbar. Entsprechend den äußeren Gegebenheiten sind die Form, Art, Größe und Anzahl der Luftdurchlassöffnung(en) 31 als verschiedene entsprechende Ausführungen der vorderen Gehäuseseite 9 wählbar. In diesem Fall ist die Luftauslassöffnung 31 kreisrund und weist außen an der vorderen Gehäuseseite 9 einen rohrförmigen Aufsatz 47 auf. Zum Beispiel wäre auch eine fast die ganze vordere Gehäuseseite 9 einnehmende Luftdurchlassöffnung 31 oder eine als Anschluss zu einem Luftleitkanal zum klimatisierenden Bereich eines Fahrzeuginnenraums ausgeformte Luftdurchlassöffnung 31 denkbar.
Die hintere Gehäuseseite 11 weist angepasst an die von außen zur Luftförderung durch den Aufnahmeraum des Gehäuses 3 anbringbare als Radialgebläse ausgestaltete Luftfördereinrichtung 33 zum einen eine Luftdurchlassöffnung 35 sowie eine Befestigungseinrichtung 37 in Form von Schraublöchern auf, durch die die als Radialgebläse ausgeformte Luftfördereinrichtung 33 mit entsprechenden Schrauben am Gehäuse 3 befestigt werden kann. Die zu behandelnde Luft wird bei Betrieb also mittels der Luftfördereinrichtung 33 durch den Aufnahmeraum des Gehäuses 3 mit Verdampfer 17 und/oder Heiz-Wärmetauscher 19 befördert. Es sind auch mehr als eine Luftfördereinrichtung 33 denkbar, wobei dann jeweils die hintere Gehäuseseite 11 entsprechende Luftdurchlassöffnungen 35 und Befestigungseinrichtungen 37 aufweist. Als dafür bekannte Befestigungsmöglichkeiten kommen auch andere Befestigungseinrichtungen 37 als Löcher für Schraubverbindungen in Frage. Des Weiteren weisen die beiden sich gegenüberliegenden Gehäuseseitendeckel 13, 15 jeweils einen für das Öffnen vorbereiteten Bereich 41 bei jeweils äußeren Befestigungseinrichtungen 43 für die Befestigung eines Thermostats 39 auf. Dieser für das Öffnen vorbereitete Bereich 41 hat eine Vorstanzung beziehungsweise Sollbruchstelle durch entsprechende Verjüngung der Gehäuseseitendeckelwand. Der Temperaturfühler 45 des außen an dem dafür ausgewählten Gehäuseseitendecken 13, 15 anbringbaren Thermostats 39 ist entsprechend wahlweise durch die eine oder die andere der beiden sich gegenüberliegenden Gehäuseseitendeckel 13, 15 durch den jeweiligen dafür zu öffnenden Bereich 41 durchführbar. Der jeweils nicht dafür genutzte für das Öffnen vorbereitete Bereich 41 bleibt verschlossen. Oft ist ein derartiges Thermostat 39 für eine keinen Verdampfer 17 beinhaltenden Ausführung der Heiz- und/oder Klimatisierungsvorrichtung 1 nicht vorgesehen. Bei einer derartigen Ausführung bleiben also beide für das Öffnen vorbereiteten Bereiche 41 verschlossen. Bei einer Ausführung der Heiz- und/oder Klimatisierungsvorrichtung 1, die auch einen Verdampfer 17 beinhaltet, führt der Temperaturfühler 45 des Thermostats 39 zum Verdampfer 17, sodass dann ein Bereich 41 zur Durchführung des Temperaturfühlers 45 des Thermostats 39 geöffnet ist. Die zusammengesetzte Heiz- und/oder Klimatisierungsvorrichtung 1 ist beispielsweise in ein Landkraftfahrzeug, wie ein Nutzlandkraftfahrzeug für die Landwirtschaft oder Bauwirtschaft mit einer Fahrerkabine, einsetzbar. Ein derartiges Landkraftfahrzeug hat damit eine Heiz- und/oder Klimatisierungsvorrichtung 1 mit erfindungsgemäßen Gehäuse 3, die sehr flexibel an die räumlichen Verhältnisse im Fahrzeug, an die Leitungsanforderungen und an die Art der Verwendung als reine Heiz- oder reine Klimatisierungsvorrichtung oder als die beiden Funktionen kombinierende Vorrichtung anpassbar ist.

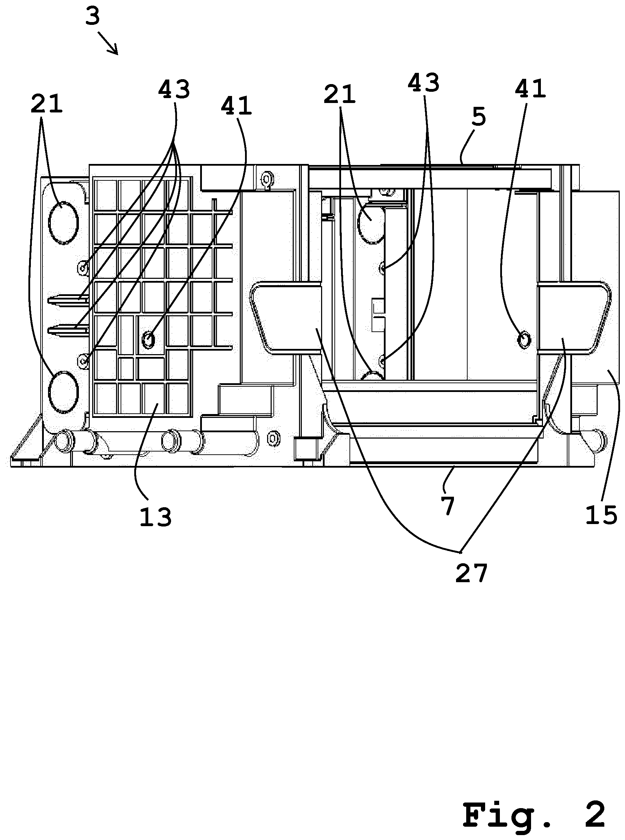

In Figur 2 ist ein Ausführungsbeispiel für ein erfindungsgemäßes Gehäuse 3 einer Heiz- und/oder Klimatisierungsvorrichtung für ein Fahrzeug gezeigt. Die beiden sich gegenüberliegenden Gehäuseseitendeckel 13, 15 sind über die obere Gehäuseseite 5 und die untere Gehäuseseite 7 mittels Schraub- und/oder Steckverbindungen verbunden. In dem Aufnahmeraum des Gehäuses 3 sind/ist je nach Art der Heiz- und/oder Klimatisierungsvorrichtung zumindest ein Verdampfer und/oder Heiz-Wärmetauscher aufnehmbar. In den beiden sich gegenüberliegenden Gehäuseseitendeckeln 13, 15 sind jeweils im hinteren Teil zwei für das Öffnen vorbereitete Bereiche 21 für die Anschlüsse eines Heiz-Wärmetauschers an eine Heizkreislauf vorhanden. Diese für das Öffnen vorbereiteten Bereiche 21 weisen jeweils Vorstanzungen oder Sollbruchstellen durch entsprechende Verjüngung der Gehäuseseitendeckelwand auf, sodass dort ein Teil des Gehäuses 3 entsprechend vereinfacht herausnehmbar, herausbrechbar oder wegklappbar ist, um jeweils eine Öffnung, also den dann geöffneten Bereich 21, für einen Anschluss eines Heiz-Wärmetauschers zu schaffen. Ein Heiz-Wärmetauscher ist, soweit überhaupt gewünscht, also derart in das Gehäuse 3 aufnehmbar, dass dessen als Wärmemittelleitungen ausgebildeten Anschlüsse wahlweise durch die eine oder die andere der beiden sich gegenüberliegenden Gehäuseseitendeckel 13, 15 durch den jeweiligen dafür geöffneten Bereich 21 durchführbar sind. Die für das Öffnen vorbereiteten Bereiche 21 sind dafür entsprechend angeordnet. Der jeweils nicht dafür genutzte für das Öffnen vorbereitete Bereich 21 bleibt verschlossen. Ferner weisen die beiden sich gegenüberliegenden Gehäuseseitendeckel 13, 15 jeweils äußere Befestigungseinrichtungen 43 für die Befestigung eines Thermostats auf. Beide sich gegenüberliegenden Gehäuseseitendeckel 13, 15 weisen ungefähr mittig ein für das Öffnen vorbereiteten Bereich 41 auf, der dafür vorgesehen ist, dass ein Temperaturfühler beispielsweise eines Thermostats wahlweise durch die eine oder die andere der beiden sich gegenüberliegenden Gehäuseseitendeckel 13, 15 durch den jeweiligen wenigstens einen dafür geöffneten Bereich 41 durchführbar ist. Die für das Öffnen vorbereiteten Bereiche 41 sind dafür entsprechend angeordnet. Der jeweils nicht genutzte für das Öffnen dafür vorbereitete Bereich 41 bleibt verschlossen.
Außerdem befindet sich an der vorderen Seite des jeweiligen Gehäuseseitendeckels 13, 15 ein weiterer für das Öffnen vorbereiteter Bereich 27. Auch dieser Bereich 27 ist durch Vorstanzungen oder Sollbruchstellen durch entsprechende Verjüngung der Gehäuseseitendeckelwand für das Öffnen vorbereitet, wobei die Öffnungen nach dem Herausnehmen oder Herausbrechen des jeweiligen Teils der Gehäuseseitendeckelwand zum Durchführen von Anschlüssen eines optional in das Gehäuse 3 aufnehmbaren Verdampfers an einen Kältemittelkreislauf vorgesehen sind. Je nach Wahl können so die Anschlüsse eines Verdampfers, sofern die Art der Heiz- und/oder Klimatisierungsvorrichtung einen Verdampfer vorsieht, durch den einen Gehäuseseitendeckel 13 oder den anderen gegenüberliegenden Gehäuseseitendeckel 15 geführt werden. Die für das Öffnen vorbereiteten Bereiche 27 sind dafür entsprechend angeordnet. Der jeweils nicht dafür genutzte für das Öffnen vorbereitete Bereich 27 bleibt verschlossen. Die Gehäuseseitendeckel 13, 15 bestehen aus gespritztem Kunststoff. Es sind auch andere geeignete Materialien dafür denkbar. Die beiden sich gegenüberliegenden Gehäuseseitendeckel 13, 15 sind, zumindest soweit die für das Öffnen vorbereiteten Bereiche 21, 27, 41 nicht geöffnet sind, spiegelsymmetrisch zueinander ausgeformt.
Eine vordere Gehäuseseite ist in diesem Fall zur besseren Darstellung des Aufnahmeraums des Gehäuses 3 in Figur 2 weggelassen. Je nach Wahl ist eine vordere Gehäuseseite mit wenigstens einer Luftdurchlassöffnung einsetzbar, die an die Gegebenheiten für den Betrieb einer Heiz- und/oder Klimatisierungsvorrichtung mit dem Gehäuse 3 angepasst ist. So beispielsweise mit Anschlussmöglichkeiten an Luftleitkanäle zur Klimatisierung eines Fahrzeuginnenraums. An die hintere in Figur 2 verdeckte Gehäuseseite ist beispielsweise ein als Radialgebläse ausgebildete Luftfördereinrichtung mit Luftdurchlassöffnung zum Aufnahmeraum des Gehäuses 3 von außen an dortigen Befestigungseinrichtungen befestigbar. Die Luftfördereinrichtung kann die bei Betrieb der Heiz- und/oder Klimatisierungsvorrichtung behandelte Luft beispielsweise aus dem Aufnahmeraum des Gehäuses 3 heraussaugend und in den Fahrzeuginnenraum weiterblasend eingestellt sein.

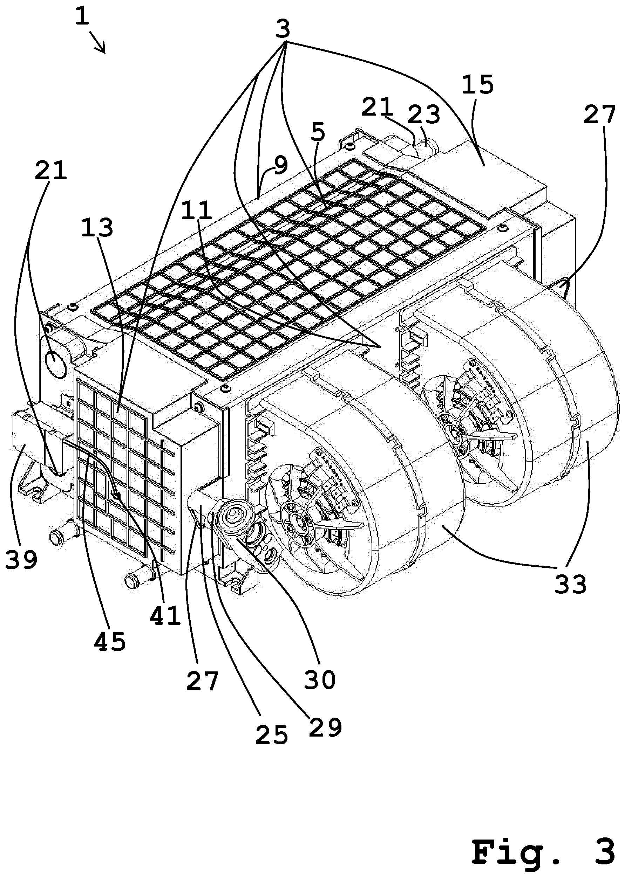

In Figur 3 ist in isometrischer Darstellung ein weiteres Ausführungsbeispiel einer Heiz- und/oder Klimatisierungsvorrichtung 1 mit einem erfindungsgemäßen Gehäuse 3 gezeigt, die zum Heizen und/oder Klimatisieren eines Innenraums eines Fahrzeugs vorgehen ist. Die beiden sich gegenüberliegenden Gehäuseseitendeckel 13, 15 entsprechend in ihrer Form, in Material und hinsichtlich der für das Öffnen vorgesehenen Bereiche 21, 27, 41 denen in Figur 1 gezeigten. Insoweit wird auf die Beschreibung zu Figur 1 verwiesen. Die Anschlüsse 25 des im Gehäuse 3 positionierten Verdampfers für den Kältemittelkreislauf sind durch den dafür vorgesehenen geöffneten Bereich 27 des für den Betrachter der Figur 3 vorderen Gehäuseseitendeckels 13 hindurchgeführt. Der Temperaturfühler 45 des Thermostats 39 ist durch den dafür vorgesehen geöffneten Bereich 41 des vorderen Gehäuseseitendeckels 13 geführt. Bei dem hinteren Gehäuseseitendeckel 15 sind diese für das Öffnen durch Vorstanzungen oder Sollbruchstellen vorbereiteten Bereiche 27, 41 weiterhin verschlossen. Die Anschlüsse 23 des sich ebenfalls im Gehäuse 3 befindenden Heiz-Wärmetauschers für die Leitungen des Wärmemittels des Heizkreislaufs sind durch die dafür vorgesehenen geöffneten Bereiche 21 des hinteren Gehäuseseitendeckels 15 hindurchgeführt. Bei dem vorderen Gehäuseseitendeckel 13 sind diese für das Öffnen durch Vorstanzungen oder Sollbruchstellen vorbereiteten Bereiche 21 weiterhin verschlossen. Es wäre ebenso die umgekehrte Lage des Heiz-Wärmetauschers und/oder des Verdampfers mit den jeweiligen Anschlüssen 23, 25 sowie des Thermostats 39 mit seinem Temperaturfühler 45 möglich beziehungsweise zu wählen gewesen. Dabei wären die Anschlüsse 23, 25 und der Temperaturfühler 45 des Thermostats 39 durch den jeweils anderen der Gehäuseseitendeckel 13, 15 durch die dann dort dafür geöffneten diesbezüglich vorbereiteten Bereiche 21, 27, 41 geführt und die für das Öffnen vorbereiteten Bereiche 21, 27, 41 des dazu jeweils gegenüberliegenden Gehäuseseitendeckels 13, 15 verschlossen geblieben. Außen an den Anschlüssen 25 des Verdampfers zum Kältemittelkreislauf ist eine Halteplatte 29 für weitere Anschlüsse zu Komponenten des Kältemittelkreislaufs wie beispielsweise ein als Expansionsventil ausgebildetes Expansionsorgan 30 angebracht.

Der Abstand der beiden sich gegenüberliegenden Gehäuseseitendeckel 13, 15 ist größer als der bei dem in Figur 1 dargestellten Ausführungsbeispiel. Der Verdampfer ist mit einem Leistungsvermögen von sechs Kilowatt entsprechend länger als der in Figur 1 gezeigte. Auch ist der Heiz-Wärmetauscher entsprechend länger mit einem größeren Leistungsvermögen als der in Figur 1 dargestellte. Die weiteren Gehäuseseiten 5, 9, 11 einschließlich der in Figur 3 verdeckten unteren Gehäuseseite sind in der Länge passend an die Längsausdehnung des Verdampfers und Heiz-Wärmetauscher angepasst. An der Gehäuseseite 11 sind zwei an geeigneten Befestigungseinrichtungen als Radialgebläse ausgebildete Luftfördereinrichtungen 33 befestigt, die bei Betrieb zu behandelnde Luft durch jeweils eine Luftdurchlassöffnung in den Aufnahmeraum des Gehäuses 3 mit aufgenommenem Verdampfer und Heiz-Wärmetauscher blasen. Denkbar ist beispielsweise auch, dass statt der zwei Radialgebläse ein Doppelradialgebläse als Luftfördereinrichtung 33 an Gehäuseseite 11 befestigt ist. Die bei Betrieb behandelte Luft strömt durch zwei in Figur 3 verdeckte Luftdurchlassöffnungen der gegenüberliegenden Gehäuseseite 9 aus dem Gehäuse 3 hinaus.

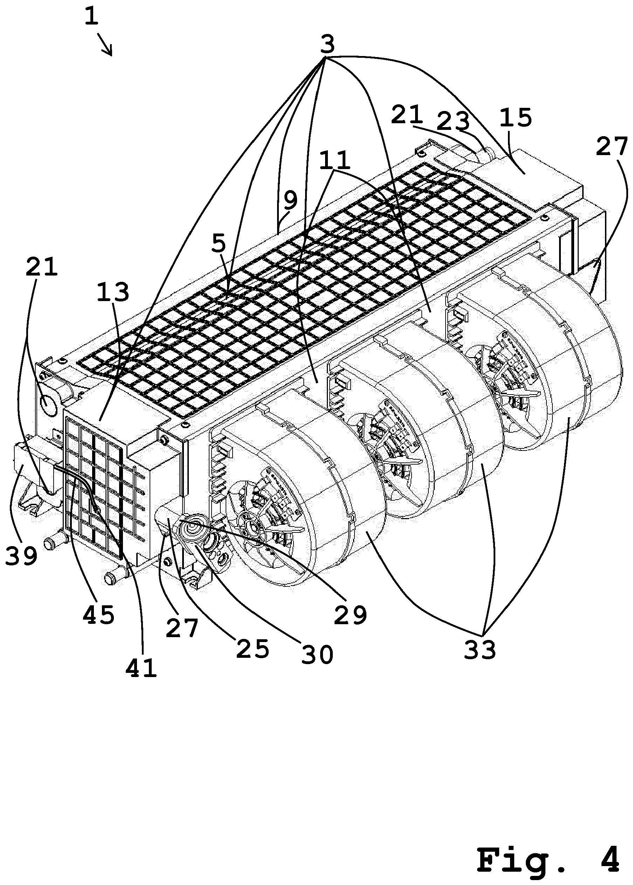

In Figur 4 ist in isometrischer Darstellung ein weiteres Ausführungsbeispiel einer für ein Fahrzeug vorgesehenen Heiz- und/oder Klimatisierungsvorrichtung 1 mit einem erfindungsgemäßen Gehäuse 3 gezeigt. Sie entspricht bis auf die Anzahl der Luftfördereinrichtungen 33, die Längsausdehnung und das Leistungsvermögen des Verdampfers und Heiz-Wärmetauschers der in Figuren 1 und 3 dargestellten. Insoweit wird auf die dortigen Beschreibungen verwiesen. Der Verdampfer hat in diesem Ausführungsbeispiel ein Leistungsvermögen von acht Kilowatt. Er ist deshalb entsprechend länger als der zu Figur 3 beschriebene. Ebenfalls ist der Heiz-Wärmetauscher länger als der in Figur 3 beschriebene. Der Abstand zwischen den beiden gegenüberliegenden Gehäuseseitendeckeln 13, 15 ist mit in der Länge passenden weiteren Gehäuseseiten 5, 9, 11 einschließlich der in Figur 4 verdeckten unteren Gehäuseseite an die Längsausdehnung des Verdampfers und/oder Heiz-Wärmetauschers ausgepasst. An der Gehäuseseite 11 sind mit geeigneten Befestigungseinrichtungen drei als Radialgebläse ausgebildete Luftfördereinrichtungen 33 befestigt. Denkbar ist beispielsweise auch, dass statt der drei Radialgebläse eine Kombination aus Radialgebläse und Doppelradialgebläse als Luftfördereinrichtungen 33 an Gehäuseseite 11 befestigt sind.

Es sind zu den in Figuren 3 und 4 gezeigten Ausführungsbeispielen einer Heiz- und/oder Klimatisierungsvorrichtung 1 mit dem erfindungsgemäßen Gehäuse 3 auch solche Varianten denkbar, die jeweils nur einen Heiz-Wärmetauscher und keinen Verdampfer oder jeweils nur einen Verdampfer und keinen Heiz-Wärmetauscher aufweisen. Die dabei ungenutzten der für das Öffnen vorbereiteten Bereiche 21, 27, 41 der Gehäuseseitendeckel 13, 15 bleiben geschlossen. Ferner ist auch eine Variante denkbar, bei der die Gehäuseseite 11 des Gehäuses 3 geeignete Befestigungseinrichtungen und jeweils eine entsprechende Luftdurchlassöffnung für mindestens einen außen an der Gehäuseseite 11 zu befestigenden Luftleitkanal aufweist. Der zumindest eine Luftleitkanal ist an seinem anderen Ende an der Luftauslassöffnung der wenigstens einen Luftfördereinrichtung 33 angebracht. Dadurch braucht eine Luftfördereinrichtung 33 nicht direkt am Gehäuse 3 der Heiz- und/oder Luftfördereinrichtung 1 befestigt zu sein.

Je nach Leistungsanforderung und Platzverhältnissen ist ein Beispiel der in Figuren 1, 3 und 4 gezeigten Ausführungsbeispiele der Heiz- und/oder Klimatisierungsvorrichtung 1 mit einem erfindungsgemäßen Gehäuse 3 in ein Landkraftfahrzeug, wie ein Nutzlandkraftfahrzeug für die Forst- oder Land- oder Bauwirtschaft, für die Heizung und/oder Klimatisierung zumindest eines Bereichs des Fahrzeuginnenraums, wie beispielsweise der Fahrerkabine, einsetzbar.

## Patentansprüche

1. Gehäuse (3) für eine Heiz- und/oder Klimatisierungsvorrichtung (1) für Fahrzeuge, das Aufnahmeraum für wenigstens einen Verdampfer (17) und/oder Heiz-Wärmetauscher (19) aufweist, derart ausgeformt, dass je nach Art der Heiz- und/oder Klimatisierungsvorrichtung (1) zumindest ein Verdampfer (17) und/oder Heiz-Wärmetauscher (19) aufnehmbar ist/sind, **dadurch gekennzeichnet,**
**dass** zwei gegenüberliegende Gehäuseseitendeckel (13, 15) des Gehäuses (3) jeweils zumindest einen für das Öffnen durch Vorstanzung(en) oder Sollbruchstelle(n) vorbereiteten Bereich (21, 27) aufweisen, der/die dafür vorgesehen ist/sind, dass bei einem in das Gehäuse (3) aufnehmbaren Verdampfer (17) und/oder Heiz-Wärmetauscher (19) wahlweise mindestens ein Anschluss (23, 25) durch den einen oder den anderen der beiden sich gegenüberliegenden Gehäuseseitendeckel (13, 15) durch den jeweiligen wenigstens einen dafür für das Öffnen vorbereiteten Bereich (21, 27) durchführbar ist/sind.

2. Gehäuse (3) nach Anspruch 1 **dadurch gekennzeichnet, dass** die beiden sich gegenüberliegenden Gehäuseseitendeckel (13, 15), zumindest soweit die für das Öffnen vorbereiteten Bereiche (21, 27) nicht geöffnet sind, spiegelsymmetrisch zueinander ausgeformt sind.

3. Gehäuse (3) nach Anspruch 1 oder 2 **dadurch gekennzeichnet, dass** die für das Öffnen vorbereiteten Bereiche (21), die für den Anschluss (23) eines Heiz-Wärmetauscher (19) vorgesehen sind, geöffnet zum Durchführen von mindestens einer Leitungen für Wärmemittel, wie insbesondere Wasser, ausgeformt sind.

4. Gehäuse (3) nach einem der Ansprüche 1 bis 3 **dadurch gekennzeichnet, dass** die für das Öffnen vorbereiteten Bereiche (27), die für den Anschluss eines Verdampfers (17) vorgesehen sind, geöffnet zum Durchführen von zumindest einer Leitungen für Kältemittel ausgeformt sind.

5. Gehäuse (3) nach einem der Ansprüche 1 bis 4 **dadurch gekennzeichnet, dass** die gegenüberliegenden Gehäuseseitendeckel (13, 15) jeweils zumindest einen weiteren für das Öffnen, insbesondere durch Vorstanzung(en) oder Sollbruchstelle(n), vorbereiteten Bereich (41) aufweisen, der/die dafür vorgesehen ist/sind, dass ein Temperaturfühler (45) wahlweise durch den einen oder den anderen der beiden sich gegenüberliegenden Gehäuseseitendeckel (13, 15) durch den jeweiligen wenigstens einen dafür für das Öffnen vorbereiteten Bereich (41) durchführbar ist.

6. Gehäuse (3) nach einem der Ansprüche 1 bis 5 **dadurch gekennzeichnet, dass** der Abstand zwischen den beiden gegenüberliegenden Gehäuseseitendeckeln (13, 15) mit in der Länge passenden weiteren Gehäuseseiten (5, 7, 9, 11) an die jeweilige Längsausdehnung des jeweiligen vorgesehenen Verdampfers (17) und/oder Heiz-Wärmetauschers (19) angepasst ist.

7. Gehäuse (3) nach einem der Ansprüche 1 bis 6 **dadurch gekennzeichnet, dass** eine erste (11) der weiteren Gehäuseseiten (5, 7, 9, 11) zum außen an der Gehäuseseite (11) Anschließen von zumindest einer Luftfördereinrichtung (33) oder von zumindest einem Luftleitkanal zu mindestens einer Luftfördereinrichtung (33) wenigstens eine Befestigungseinrichtung (37) sowie wenigstens eine erste Luftdurchlassöffnung (35) aufweist und eine zweite (9) der weiteren Gehäuseseiten (5, 7, 9, 11) zumindest eine zweite Luftdurchlassöffnung (31) vorgesehen für in den Aufnahmeraum des Gehäuses (3) zu zumindest einer Luftfördereinrichtung (33) oder aus dem Aufnahmeraum des Gehäuses (3) von zumindest einer Luftfördereinrichtung (33) strömende Luft aufweist.

8. Gehäuse (3) nach einem der Ansprüche 1 bis 7, **dadurch gekennzeichnet, dass** zumindest die beiden sich gegenüberliegenden Gehäuseseitendeckel (13, 15) aus gespritztem Kunststoffe bestehen.

9. Heiz- und/oder Klimatisierungsvorrichtung (1) für Fahrzeuge umfassend zumindest einen Verdampfer (17) und/oder einen Heiz-Wärmetauscher (19) sowie wenigstens eine Luftfördereinrichtung (33), **dadurch gekennzeichnet, dass** die Heiz- und/oder Klimatisierungsvorrichtung (1) ein Gehäuse (3) nach einem der Ansprüche 1 bis 8 aufweist.

10. Fahrzeug mit einer Heiz- und/oder Klimatisierungsvorrichtung (1) nach Anspruch 9.

11. Fahrzeug nach Anspruch 10, **dadurch gekennzeichnet, dass** es ein Landkraftfahrzeug, insbesondere ein Nutzlandkraftfahrzeug, ist.

12. Verfahren zur Zusammensetzung einer Heiz- und/oder Klimatisierungsvorrichtung (1) nach Anspruch 9 enthaltend die Schritte,
- Auswählen des Gehäuseseitendeckels (13, 15) und dessen für das Öffnen zum Durchführen mindestens eines Anschlusses (23, 25) des aufzunehmenden Verdampfers (17) und/oder Heiz-Wärmetauschers (19) vorbereiteten Bereichs (21, 27),
- Öffnen diese(s)/r Bereich(s)/e (21, 27) des ausgewählten Gehäuseseitendeckels (13, 15),
- Durchführen des mindestens einen Anschlusses (23, 25) des Verdampfers (17) und/oder Heiz-Wärmetauschers (19) durch den/die geöffneten Bereich(e) (21, 27) des ausgewählten Gehäuseseitendeckels (13, 15) beim Einbau des Verdampfer (17) und/oder Heiz-Wärmetauscher (19) in den Aufnahmeraum des Gehäuses (3).

## Claims

1. Housing (3) for a heating and/or climate control apparatus (1) for vehicles, which housing has receiving space for at least one evaporator (17) and/or heating heat exchanger (19), shaped in such a way that at least one evaporator (17) and/or heating heat exchanger (19) can be received depending on the type of heating and/or climate control apparatus (1), **characterized in that** two housing side covers (13, 15) of the housing (3) which lie opposite one another have in each case at least one region (21, 27) which is prepared for opening by way of a pre-punched portion or portions or predetermined break point or break points, which is/are provided such that, in the case of an evaporator (17) and/or heating heat exchanger (19) which can be received in the housing (3), at least one connector (23, 25) can be guided selectively by way of the one or the other of the two housing side covers (13, 15) which lie opposite one another through the respective at least one region (21, 27) which is prepared for opening for this purpose.

2. Housing (3) according to Claim 1, **characterized in that** the two housing side covers (13, 15) which lie opposite one another are of mirror-symmetrical shape with respect to one another, at least as long as the regions (21, 27) which are prepared for opening are not open.

3. Housing (3) according to Claim 1 or 2, **characterized in that** the regions (21) which are prepared for opening and are provided for the connector (23) of the heating heat exchanger (19) are formed such that they are open for guiding through at least one line for heating medium, such as, in particular, water.

4. Housing (3) according to one of Claims 1 to 3, **characterized in that** the regions (27) which are prepared for opening and are provided for the connector of an evaporator (17) are formed such that they are open for guiding through at least one line for refrigerant.

5. Housing (3) according to one of Claims 1 to 4, **characterized in that** the housing side covers (13, 15) which lie opposite one another have in each case at least one further region (41) which is prepared for the opening, in particular by way of a pre-punched portion or portions or predetermined break point or break points which is/are provided such that a temperature sensor (45) can be guided selectively by way of the one or the other of the two housing side covers (13, 15) which lie opposite one another through the respective at least one region (41) which is prepared for opening.

6. Housing (3) according to one of Claims 1 to 5, **characterized in that** the spacing between the two housing side covers (13, 15) which lie opposite one another is adapted by way of further housing sides (5, 7, 9, 11) of fitting length to the respective length extent of the respective provided evaporator (17) and/or heating heat exchanger (19).

7. Housing (3) according to one of Claims 1 to 6, **characterized in that** a first one (11) of the further housing sides (5, 7, 9, 11), for connecting at least one air delivery device (33) or at least one air guiding duct to at least one air delivery device (33) on the outside of the housing side (11), has at least one fastening device (37) and at least one first air passage opening (35), and a second one (9) of the further housing sides (5, 7, 9, 11) has at least one second air passage opening (31) provided for air which flows into the receiving space of the housing (3) to at least one air delivery device (33) or out of the receiving space of the housing (3) from at least one air delivery device (33).

8. Housing (3) according to one of Claims 1 to 7, **characterized in that** at least the two housing side covers (13, 15) which lie opposite one another consist of injection moulded plastic.

9. Heating and/or climate control apparatus (1) for vehicles comprising at least one evaporator (17) and/or one heating heat exchanger (19), and at least one air delivery device (33), **characterized in that** the heating and/or climate control apparatus (1) has a housing (3) according to one of Claims 1 to 8.

10. Vehicle having a heating and/or climate control apparatus (1) according to Claim 9.

11. Vehicle according to Claim 10, **characterized in that** it is a landborne motor vehicle, in particular a commercial landborne motor vehicle.

12. Method for assembling a heating and/or climate control apparatus (1) according to Claim 9, comprising the steps:
selecting of the housing side cover (13, 15) and its region (21, 27) which is prepared for opening in order to guide through at least one connector (23, 25) of the evaporator (17) and/or heating heat exchanger (19) to be received,
- opening of the said region or regions (21, 27) of the selected housing side cover (13, 15),
- guiding through of the at least one connector (23, 25) of the evaporator (17) and/or heating heat exchanger (19) through the opening region or regions (21, 27) of the selected housing side cover (13, 15) during the installation of the evaporator (17) and/or heating heat exchanger (19) into the receiving space of the housing (3).

## Revendications

1. Boîtier (3) pour un dispositif de chauffage et/ou de climatisation (1) pour véhicules, lequel boîtier comprend un espace de réception pour au moins un évaporateur (17) et/ou un échangeur de chaleur de chauffage (19), formé de telle sorte qu'en fonction du type de dispositif de chauffage et/ou de climatisation (1), au moins un évaporateur (17) et/ou un échangeur de chaleur de chauffage (19) peut/peuvent être reçu(s), **caractérisé en ce que**
deux couvercles latéraux opposés (13, 15) du boîtier (3) comprennent respectivement au moins une région (21, 27) préparée pour l'ouverture par le biais d'une/de pré-découpe(s) ou d'un/de point(s) destiné(s) à la rupture, laquelle/lesquelles est/sont prévue(s) pour que, dans le cas d'un évaporateur (17) et/ou d'un échangeur de chaleur de chauffage (19) pouvant être reçu(s) dans le boîtier (3), sélectivement au moins un raccordement (23, 25) peut être guidé à travers l'un ou l'autre des deux couvercles latéraux de boîtier opposés (13, 15) à travers l'au moins une région (21, 27) respective préparée à cet effet pour l'ouverture.

2. Boîtier (3) selon la revendication 1, **caractérisé en ce que** les deux couvercles latéraux de boîtier opposés (13, 15) sont formés de manière à présenter une symétrie miroir l'un par rapport à l'autre pour autant que les régions (21, 27) préparées pour l'ouverture ne soient pas ouvertes.

3. Boîtier (3) selon la revendication 1 ou 2, **caractérisé en ce que** les régions (21) préparées pour l'ouverture, lesquelles sont prévues pour le raccordement (23) d'un échangeur de chaleur de chauffage (19), sont formées de manière ouverte pour le passage d'au moins une conduite pour un agent caloporteur, comme en particulier de l'eau.

4. Boîtier (3) selon l'une des revendications 1 à 3, **caractérisé en ce que** les régions (27) préparées pour l'ouverture, lesquelles sont prévues pour le raccordement d'un évaporateur (17), sont formées de manière ouverte pour le passage d'au moins une conduite pour un agent frigorigène.

5. Boîtier (3) selon l'une des revendications 1 à 4, **caractérisé en ce que** les couvercles latéraux de boîtier opposés (13, 15) comprennent respectivement au moins une autre région (41) préparée pour l'ouverture, en particulier par le biais d'une/de pré-découpe(s) ou d'un/de point(s) destiné(s) à la rupture, laquelle/lesquelles est/sont prévue(s) pour qu'une sonde de température (45) puisse être guidée sélectivement à travers l'un ou l'autre des deux couvercles latéraux de boîtier opposés (13, 15) à travers l'au moins une région (41) respective préparée à cet effet pour l'ouverture.

6. Boîtier (3) selon l'une des revendications 1 à 5, **caractérisé en ce que** la distance entre les deux couvercles latéraux de boîtier opposés (13, 15) est adaptée à l'étendue longitudinale respective de l'évaporateur (17) et/ou de l'échangeur de chaleur de chauffage (19) prévu(s) respectif(s) à l'aide d'autres côtés de boîtier (5, 7, 9, 11) de longueur appropriée.

7. Boîtier (3) selon l'une des revendications 1 à 6, **caractérisé en ce qu'**un premier (11) des autres côtés de boîtier (5, 7, 9, 11) comprend, pour le raccordement à l'extérieur au niveau du côté de boîtier (11) d'au moins un dispositif de refoulement d'air (33) ou d'au moins un canal de guidage d'air vers au moins un dispositif de refoulement d'air (33), au moins un dispositif de fixation (37) ainsi qu'au moins une première ouverture de passage d'air (35), et un deuxième (9) des autres côtés de boîtier (5, 7, 9, 11) comprend au moins une deuxième ouverture de passage d'air (31) prévue pour l'air s'écoulant dans l'espace de réception du boîtier (3) vers au moins un dispositif de refoulement d'air (33) ou hors de l'espace de réception du boîtier (3) à partir d'au moins un dispositif de refoulement d'air (33).

8. Boîtier (3) selon l'une des revendications 1 à 7, **caractérisé en ce qu'**au moins les deux couvercles latéraux de boîtier opposés (13, 15) sont constitués de matières synthétiques moulées par injection.

9. Dispositif de chauffage et/ou de climatisation (1) pour véhicules comportant au moins un évaporateur (17) et/ou un échangeur de chaleur de chauffage (19) ainsi qu'au moins un dispositif de refoulement d'air (33), **caractérisé en ce que** le dispositif de chauffage et/ou de climatisation (1) comprend un boîtier (3) selon l'une des revendications 1 à 8.

10. Véhicule comprenant un dispositif de chauffage et/ou de climatisation (1) selon la revendication 9.

11. Véhicule selon la revendication 10, **caractérisé en ce qu'**il s'agit d'un véhicule automobile terrestre, en particulier d'un véhicule automobile terrestre utilitaire.

12. Procédé d'assemblage d'un dispositif de chauffage et/ou de climatisation (1) selon la revendication 9, comportant les étapes de
- sélection du couvercle latéral de boîtier (13, 15) et de sa région (21, 27) préparée pour l'ouverture pour le passage d'au moins un raccordement (23, 25) de l'évaporateur (17) et/ou de l'échangeur de chaleur de chauffage (19) à recevoir,
- ouverture de cette/ces région(s) (21, 27) du couvercle latéral de boîtier sélectionné (13, 15),
- passage dudit au moins raccordement (23, 25) de l'évaporateur (17) et/ou de l'échangeur de chaleur de chauffage (19) à travers la/les région(s) ouverte(s) (21, 27) du couvercle latéral de boîtier sélectionné (13, 15) lors de l'installation de l'évaporateur (17) et/ou de l'échangeur de chaleur de chauffage (19) dans l'espace de réception du boîtier (3).
